# EUROPÄISCHE PATENTANMELDUNG

(11) **EP 1 139 610 A2**
(43) Veröffentlichungstag der Anmeldung: **04.10.2001**
(21) Anmeldenummer: 01100282.1
(22) Anmeldetag: 04.01.2001
(51) Int. Cl.: H04L 12/40, H04L 12/56

(54) **Verfahren zur Steuerung der Transportgüte eines Paketdatenbusses**

(30) Priorität: 25.03.2000 DE 10014983
(71) Anmelder: Tenovis GmbH & Co. KG, 60362 Frankfurt am Main (DE)
(72) Erfinder: Maier, Klaus, 61231 Bad Nauheim (DE); Weisenburger, Alfons, 63225 Langen (DE)
(74) Vertreter: Patentanwaltskanzlei WILHELM & BECK

(57) **Zusammenfassung**

Bei einem Verfahren zur Steuerung der Transportgüte eines Paketdatenbusses kann bei Rückstau die Überwachungszeit für das Senden an einen adressierten Empfänger reduziert werden, damit langsam arbeitende oder fehlerhafte Empfangsstationen den Datenverkehr so wenig wie möglich beeinträchtigen. Durch Protokollierung der Busauslastung und der von den Teilnehmern beanspruchten Bandbreiten kann der Zugriff so gesteuert werden, dass bei Zulassung eines neuen Teilnehmers die erlaubte Bandbreite des Paketdatenbusses nicht überschritten wird.

## Beschreibung

Die Erfindung betrifft ein Verfahren zur Steuerung der Transportgüte eines Paketdatenbusses, auf welchen mehrere an den Paketdatenbus angeschlossene Teilnehmer mit verschiedenen Datenübertragungsraten zugreifen können. Ferner betrifft die Erfindung eine Schnittstelle zur Ankopplung einer Prozessorbaugruppe an einen Paketdatenbus, enthaltend einen Zwischenspeicher für zu übermittelnde Datenpakete sowie eine Überwachungsschaltung zur Überwachung der Übertragung der im Zwischenspeicher enthaltenen Daten an einen Empfänger, wobei ein Übertragungsversuch nach einer vorgegebenen Überwachungszeit abgebrochen wird, wenn kein Empfang der Daten erfolgt ist.

Ein Bus dient in Einrichtungen zur elektronischen Daten- und Signalverarbeitung als gemeinsamer Kommunikationsweg für die Kommunikation von mehreren Teilnehmern. Da zu einem gegebenen Zeitpunkt jeweils nur ein an den Bus angeschlossener Teilnehmer Informationen senden darf, ist es wichtig, den Zugriff der Teilnehmer auf den Bus abzustimmen und zu kontrollieren. Um auch bei hohem Datenaufkommen ein akzeptables Hochlastverhalten des Busses zu erreichen, ist diese Kontrolle so auszuführen, dass die gegebene Übertragungskapazität des Busses möglichst gut ausgeschöpft wird und dass sich die am Bus angeschlossenen Teilnehmer möglichst wenig gegenseitig beeinträchtigen.

Ein Beispiel für ein Bussystem ist ein Parallelbus bzw. Paketdatenbus, wie er in der DE 43 12 232 A1 und der DE 43 23 704 A1 beschrieben wird. An diesen Paketdatenbus können verschiedene Teilnehmer wie z.B. Prozessorbaugruppen von Rechnern oder Vermittlungsanlagen über Schnittstellen, die im folgenden als CBI bezeichnet werden, angeschlossen werden. Eine Schnittstelle CBI enthält dabei einen Zwischenspeicher für zu übermittelnde Datenpakete sowie eine Überwachungsschaltung zur Überwachung der Übertragung von im Zwischenspeicher enthaltenen Daten an einen Empfänger. Der Empfänger kann dabei sowohl ein anderer am Paketdatenbus angeschlossener Teilnehmer sein als auch derjenige Teilnehmer, der unmittelbar über die besagte Schnittstelle CBI an den Paketdatenbus angeschlossen ist. Die Überwachungsschaltung im CBI sorgt dafür, dass ein Übertragungsversuch von Daten zum Empfänger nach einer vorgegebenen Überwachungszeit abgebrochen wird, wenn innerhalb dieser Zeit kein Empfang der Daten durch den Empfänger erfolgt ist. In diesem Falle werden die im Zwischenspeicher enthaltenen Daten verworfen, und es wird mit dem nächsten Datenübertragungsversuch (z.B. an einem Empfänger) fortgefahren.

Es ist wünschenswert, einen solchen Paketdatenbus zur Übertragung variabler Nutzdatenströme verschiedener Anwendungen einzusetzen. Derartige Anwendungen (Teilnehmer) haben in der Regel jeweils individuell verschiedene Datenübertragungsraten beziehungsweise Bandbreiten. Bevor einem solchen Teilnehmer der Zugriff auf den Paketdatenbus erlaubt wird, ist es wünschenswert zu klären, ob dies unter Einhaltung der Transportgüte des Paketdatenbusses (QoS, Quality of Service) möglich ist. Diese Beurteilung erfolgt im allgemeinen durch eine für die Ressource Paketdatenbus zuständige Instanz.

Aufgabe der vorliegenden Erfindung war es, ein Verfahren und eine Schnittstelle der eingangs genannten Art bereitzustellen, welche bei hoher Auslastung des Paketdatenbusses eine sinnvolle Aufteilung der zur Verfügung stehenden Busbandbreiten auf die angeschlossenen Teilnehmer gewährleisten.

Diese Aufgabe wird durch ein Verfahren mit den in Anspruch 1 angegeben Merkmalen und eine Schnittstelle mit den in Anspruch 11 genannten Merkmalen gelöst.

Das Verfahren dient demnach der Steuerung einer hohen Transportgüte eines Paketdatenbusses, auf welchen mehrere an den Bus angeschlossene Teilnehmer mit verschiedenen Datenübertragungsraten über jeweils eine konfigurierbare Schnittstelle zugreifen können. Dabei wird die genannte Schnittstelle bei Beginn eines Paketflußstroms so konfiguriert, dass die Überwachungszeit vom Absenden bis zum Empfang eines Datenpaketes, das von der Schnittstelle an einen anderen Teilnehmer am Paketdatenbus oder an den mit der Schnittstelle verbundenen Teilnehmer gesendet wurde, reduziert wird.

Wenn die Schnittstelle eines Teilnehmers Zugriff auf den Paketdatenbus erhalten hat, sendet sie ein Datenpaket, das sich vorzugsweise in einem Zwischenspeicher befindet, an einen gewünschten und adressierten anderen Teilnehmer am Paketdatenbus. In ähnlicher Weise versucht die Schnittstelle des Teilnehmers nach Erhalt und Zwischenspeicherung von Daten aus dem Paketdatenbus, diese Daten an den ihr zugeordneten Teilnehmer weiterzuleiten. Dabei wird eine bestimmte Überwachungszeit (timeout) beobachtet, ob ein Empfang der Daten durch die angesprochene Zieleinheit erfolgt ist. Erfolgt der Empfang in dieser Zeit nicht, so wird das zu sendende Paket verworfen.

Die oben genannte Konfiguration der Schnittstelle erfolgt vorzugsweise durch Mittel, die auf der Schnittstelle selbst vorhanden sind und welche die den Stau des Paketflusses erfassen. Somit ist jede Schnittstelle zur selbständigen Ausführung einer Prozedur fähig, vermöge welcher sie ihr Übertragungsverhalten in einer Weise anpassen kann, die insgesamt die Transportgüte in einer solchen Situation auf relativ hohem Niveau hält.

Die genannten Mittel können dabei vorzugsweise den Rückstau von Daten erfassen, die von der Schnittstelle an einen anderen Teilnehmer am Paketdatenbus und/oder an den mit der Schnittstelle verbundenen Teilnehmer übermittelt werden sollen. Ein Rückstau von Daten entsteht, wenn die Schnittstelle schneller Daten empfängt, als sie weiter senden kann. Die empfangenen Daten können dabei sowohl vom mit der Schnittstelle verbundenen Teilnehmer kommen, der diese Daten an einen anderen Teilnehmer am Paketdatenbus übermitteln will, als auch Daten sein, die die Schnittstelle bereits über den Paketdatenbus empfangen hat und an den mit ihr verbundenen Teilnehmer weiterleiten will. Tritt in diesen Datenströmen ein Rückstau auf, so ist dieser ein Indiz dafür, dass der jeweilige Empfänger die Daten nicht mit der gewünschten Geschwindigkeit entgegennehmen kann. Bei der Sendung von Datenpaketen über den Paketdatenbus kann zum Beispiel der adressierte Teilnehmer für den Empfang der Daten zu langsam arbeiten, es kann aber auch bei diesem Teilnehmer eine technische Störung aufgetreten sein oder der Teilnehmer kann komplett ausgefallen sein. In jedem Falle deutet der Rückstau der Daten darauf hin, dass es Probleme mit der Datenübertragung gibt und dass somit eine Umkonfiguration der Schnittstelle in der oben erläuterten Art angezeigt ist. Umgekehrt kann natürlich das Fehlen eines Rückstaus auf eine gut funktionierende Datenverbindung hinweisen und somit eine Umkonfiguration der Schnittstelle zurück in den Standardzustand nach sich ziehen, in welchem längere Überwachungszeiten für die Übertragung von Datenpaketen gewährt werden. Eine solche Rückstellung in den Standardzustand kann auch automatisch nach Ablauf einer gewissen Zeit vorgenommen werden.

Die genannten Mittel stellen einen Rückstau von Daten vorzugsweise dadurch fest, dass sie den Füllstand von Zwischenspeichern für Daten erfassen und bei Überschreiten beziehungsweise Unterschreiten eines bestimmten Füllstandes eine Neukonfigurierung der Schnittstelle veranlassen. In der Regel besitzt die Schnittstelle Datenzwischenspeicher (Puffer), in denen vom Paketdatenbus eingehende beziehungsweise vom angeschlossenen Teilnehmer zwecks Versendung übermittelte Daten zwischengespeichert werden, bis sie von der Schnittstelle weitergeleitet werden. Der Füllstand dieser Datenzwischenspeicher zeigt somit an, ob ein Rückstau in der Datenübermittlung stattfindet.

Die Konfiguration der Schnittstelle zur Reduzierung der Überwachungszeit erfolgt vorzugsweise dadurch, dass der Wert eines zugeordneten Registers (flag) auf einen bestimmten Wert gesetzt wird, welcher anzeigt, dass die Überwachungszeit auf einen bestimmten Bruchteil zu verkürzen ist. Typischerweise findet eine Reduzierung der Überwachungszeit auf ½ beziehungsweise auf ¼ der normalen Überwachungszeit statt.

Wenn das Bussystem mit einigen Teilnehmern sehr hoher Datenraten und vielen Datenquellen, die nur geringen Verkehr erzeugen, konfrontiert ist, so ist insbesondere für die hohen Datenraten ein hoher Nutzungsgrad an Übertragungskapazität gewünscht. Gleichzeitig sollte eine minimale Zugriffszeit beziehungsweise ―kapazität für die kleinen Datenquellen garantiert sein. Gemäß einer Weiterbildung des erfindungsgemäßen Verfahrens wird daher die Schnittstelle bei hoher Auslastung des Paketdatenbusses so konfiguriert, dass die maximale Datentransferrate, mit welcher die Schnittstelle Daten über den Paketdatenbus senden kann, begrenzt wird.

Die Begrenzung der Datentransferrate ist insbesondere für Teilnehmer mit einer hohen Datenübertragungsrate vorteilhaft, zum Beispiel einer Rate von mehr als 1 Mbps. Mit der Begrenzung kann sichergestellt werden, dass nicht ein einzelner Teilnehmer mit hohem Datenaufkommen den Paketdatenbus für die anderen Teilnehmer quasi blockiert und eine sinnvolle und angemessen verteilte Nutzung der Buskapazität damit verhindert. Wenn ein Teilnehmer die Erlaubnis für einen Zugriff mit einer vorgegebenen maximalen Bandbreite erhalten hat, so sollte sichergestellt werden, dass er nicht mehr senden kann als erlaubt wurde. Die einem Teilnehmer zugestandene maximale Datentransferrate kann zum Beispiel beim Teilnehmer in einem Initialisierungsregister gespeichert werden. Sie wird typischerweise in Schritten von 0,5 Mbps verändert.

Die Konfiguration der Schnittstelle zur Begrenzung der Datentransferrate eines Teilnehmers am Paketdatenbus kann durch Setzen eines speziellen Registers (flag) erfolgen, durch welches die erlaubte Bandbreite der Schnittstelle auf einen definierten Bruchteil (zum Beispiel ½ oder ¼) des ursprünglichen Wertes für eine bestimmte Zeit reduziert wird. Dabei sollte jedoch sichergestellt werden, dass die Bandbreite nicht unter 1 Mbps sinkt. Das genannte Setzen des Registers kann bei Initialisierung der Schnittstelle oder während des Betriebs erfolgen. Bei Überlastung zum Beispiel des Paketdatenbusses kann die zentrale Mangagementeinheit (MMG) des Busses die Bandbreite bestimmter Schnittstellen begrenzen bzw. nach Ende der Überlastung wieder aufheben.

Nach einer anderen Weiterbildung des erfindungsgemäßen Verfahrens wird die Schnittstelle bei hoher Auslastung des Paketdatenbusses so konfiguriert, dass kein Zugriff auf den Paketdatenbus mehr erfolgt (transmit disable). Dieses Abhängen der Schnittstelle vom Paketdatenbus kann wahlweise mit oder ohne die Abgabe von Paketverlustmeldungen erfolgen. Ein solcher kurzzeitiger oder für immer andauernder Entzug der Erlaubnis zum Zugriff auf den Datenbus kann zum Beispiel im Rahmen von Fehleranalysen oder Overload-Strategien notwendig sein. Er kann mit einem "transmit disable" Befehl (Initialisierungspaket) von einer zentralen Einheit erfolgen.

Das Verfahren zur Steuerung der Auslastung eines Paketdatenbusses kann ferner dadurch gekennzeichnet sein, dass die Auslastung des Paketdatenbusses gemessen und protokolliert wird, und dass der Zugriff der Schnittstelle eines Teilnehmers auf den Paketdatenbus nur dann zugelassen wird, wenn die erwartungsgemäß beanspruchte Bandbreite bei der aktuellen Auslastung des Paketdatenbusses nicht zu einer Überlastung führt. Unter eine Überlastung ist dabei zu verstehen, dass keine sinnvolle und angemessene Verteilung der Buskapazität auf alle daran angeschlossenen Teilnehmer mehr möglich ist. Bei einem Paketdatenbus kann dieses Verfahren zum Beispiel dadurch umgesetzt werden, dass jede Schnittstelle Informationsregister erhält. Ein Register hierunter stellt einen aktuellen Messwert über die Paketdatenbus (node) Auslastung dar (current load). Dieser Wert steht jedem Teilnehmer am Paketdatenbus zur Verfügung, insbesondere natürlich der zentralen Einheit, welche den Zugriff der Teilnehmer auf den Paketdatenbus kontrolliert. Mit Hilfe geeigneter Software kann aus den Messungen und Protokollen eine statistische Auswertung über die nahe und entfernte Vergangenheit der Busbelastung gemacht werden. Diese liefert insbesondere Informationen darüber, mit welcher Bandbreite ein Teilnehmer, der Zugriff auf den Paketdatenbus wünscht, diesen Paketdatenbus belasten wird. Die Steuereinheit kann dann entscheiden, ob eine solche hinzutretende Belastung des Paketdatenbusses bei der aktuell existierenden Auslastung zu verkraften wäre oder nicht. Das Maß der verkraftbaren Auslastung kann dabei adaptiv verändert werden, das heißt insbesondere schrittweise solange erhöht, bis Qualitätsverluste der Datenübertragung auf dem Paketdatenbus detektiert werden. Geeignete Verfahren zur Ausnutzung der Information über die Busbelastung sind in der DE 41 34 476 C1 offenbart.
Die in dem oben beschriebenen Verfahren vorgenommene Konfigurierung der Schnittstelle kann insbesondere auch durch eine zentrale Einheit zur Steuerung des Paketdatenbusses erfolgen. Eine solche zentrale Einheit hat somit die Möglichkeit, durch die Ausgabe von geeigneten Kommandos an die Teilnehmer am Paketdatenbus deren Umkonfigurierung zu bewirken, so dass bei hohem Datenaufkommen eine sinnvolle Verteilung der vorhandenen Buskapazität stattfindet.

Die Erfindung betrifft ferner eine Schnittstelle zur Ankopplung einer Prozessorbaugruppe an einen Paketdatenbus, enthaltend einen Zwischenspeicher für zu übermittelnde Datenpakete sowie eine Überwachungsschaltung zur Überwachung der Übertragung der im Zwischenspeicher enthaltenen Daten an einen Empfänger. Bei dem Empfänger kann es sich dabei sowohl um einen anderen am Paketdatenbus angeschlossenen Teilnehmer handeln als auch um den der Schnittstelle selbst unmittelbar zugeordneten Teilnehmer. Die Überwachungsschaltung ist so eingerichtet, dass ein Übertragungsversuch nach einer vorgegebenen Überwachungszeit abgebrochen wird, wenn kein Empfang der Daten durch die Zieleinheit erfolgt ist. Die Schnittstelle ist dadurch gekennzeichnet, dass sie ein Initialisierungsregister mit Konfigurationsspeichern enthält, wobei mindestens ein Konfigurationsspeicher so gesetzt werden kann, dass die genannte Überwachungszeit gegenüber dem vorgegebenen Wert verkürzt wird. Mit der genannten Schnittstelle lässt sich das oben erläuterte Verfahren zur Steuerung der Transportgüte eines Paketdatenbusses ausführen. Bei Paketrückstau wird dabei der Konfigurationsspeicher im Initialisierungsregister entsprechend gesetzt, so dass die Überwachungszeit auf typischerweise ½ oder ¼ des normalen Wertes reduziert wird. Hierdurch wird erreicht, dass ein Datenstau vermieden wird, bei dem zum Beispiel durch eine gestörte oder nicht empfangsbereite Zieladresse jeweils die maximale Überwachungszeit abgewartet wird.

Die erfindungsgemäße Schnittstelle enthält vorzugsweise eine Monitorschaltung, welche vom Paketdatenbus empfangene Daten, die Konfigurierungsinformationen enthalten, an das Initialisierungsregister weiterleiten kann. Auf diese Weise ist eine schnelle und unmittelbare Steuerung der Schnittstelle von einer zentralen Überwachungseinheit für den Betrieb des Paketdatenbusses möglich, ohne dass der an der Schnittstelle angeschlossene Teilnehmer beteiligt werden muss.

Die erfindungsgemäße Schnittstelle enthält weiterhin vorzugsweise Rückmeldungsleitungen, welche von Datenzwischenspeichern zur Überwachungsschaltung für die Datenübertragung verlaufen und über welche der Füllstand der Datenzwischenspeicher gemeldet werden kann. Eine Zwischenspeicherung von Daten, die von der Schnittstelle empfangen wurden und entweder über den Paketdatenbus an einen anderen Teilnehmer oder an den mit der Schnittstelle unmittelbar verbundenen Teilnehmer weitergeleitet werden sollen, muss in der Regel immer stattfinden, damit die Schnittstelle unterschiedliche Übertragungsgeschwindigkeiten im Dateneingang und Datenausgang ausgleichen kann. Derartige Zwischenspeicher können als Hardware oder als Software verwirklicht sein. In der Regel handelt es sich um sogenannte FIFO-Speicher (First-In-First-Out).

Das geschilderte Vorgehen kann zum Beispiel dann einsetzen, wenn die FIFOs von Schnittstellen, die von mehreren Datenquellen genutzt werden, über ein normales Maß hinaus anwachsen. Dies kann zum Beispiel dadurch eintreten, dass auf den Paketdatenbus ein Zugriff von mehr maximalen Bandbreiten zugelassen wurde, als theoretisch erlaubt wäre. Letzteres wird im allgemeinen deshalb vorgenommen, weil nicht alle Datenquellen zu jeder Zeit mit der für sie maximal zugelassenen Datenrate senden. Im Mittel kann daher mehr Zugriff auf den Paketdatenbus zugelassen werden, als der Summe der maximalen Datenrate entspricht. Die Zulassung einer größeren Bandbreite als der Summe der maximalen Bandbreiten kann auch dann erfolgen, wenn es sich nicht oder nicht ausschließlich um Echtzeit (realtime) Datenströme wie zum Beispiel Sprachdaten handelt, sondern um Paketverkehr, der kurzzeitig reduzierte Datenströme mit Rückstaueffekt verkraften kann.

Wenn ein FIFO zum Beispiel auf über 50% angewachsen ist, kann die Überwachungszeit (timeout) auf ein Viertel reduziert werden. Diese Funktion kann getrennt für die Empfangs- (receive) und die Sende- (transmit) Richtung aktiviert werden. Der eingestellte Normalwert (default) ist abhängig vom Einzelfall, d.h. der Position einer Schnittstelle in einem Verbindungsnetz (vgl. DE 43 23 704 A1: IML oder normal).

Mit der Verkürzung der Überwachungszeit wird zum Beispiel in Senderichtung auf den Paketdatenbus erreicht, dass bei hohem Verkehr die Pakete für eine langsame beziehungsweise defekte Empfangsstation vorzeitig weggeworfen werden. Damit kann die Verzögerung unbeteiligter Pakete wesentlich reduziert werden.

Das Initialisierungsregister enthält vorzugsweise auch solche Konfigurationsspeicher, welche die maximale Datentransferrate der Schnittstelle festlegen. Bei hoher Auslastung des Paketdatenbusses kann hierüber die Datenmenge begrenzt werden, die die Schnittstelle über den Bus senden kann, so dass andere Teilnehmer am Paketdatenbus nicht in unangemessener Weise vom Zugriff auf den Bus abgeschnitten werden.

Weiterhin kann das Initialisierungsregister solche Konfigurationsspeicher enthalten, welche im gesetzten Zustand ein Aussetzen des Datentransfers durch die Schnittstelle anzeigen können. Das heißt, dass im gesetzten Zustand dieser Konfigurationsspeicher die Schnittstelle keine Daten mehr über den Paketdatenbus senden und/oder keine Daten mehr vom Paketdatenbus empfangen kann. Eine solche Maßnahme kann sich kurzzeitig als Überlastungsstrategie oder beim Auftreten von Fehlern als sinnvoll erweisen.

Die Schnittstelle kann ferner ein für den an der Schnittstelle angeschlossenen Teilnehmer zugängliches Informationsregister enthalten, in welchem unter anderem ein Maß für die Auslastung des Paketdatenbusses enthalten ist. Auf diese Weise kann der genannte Teilnehmer eine Information über die momentane Auslastung des Busses erhalten und in geeigneter Weise hierauf reagieren, das heißt zum Beispiel sein Zugriffsverhalten entsprechend einstellen.

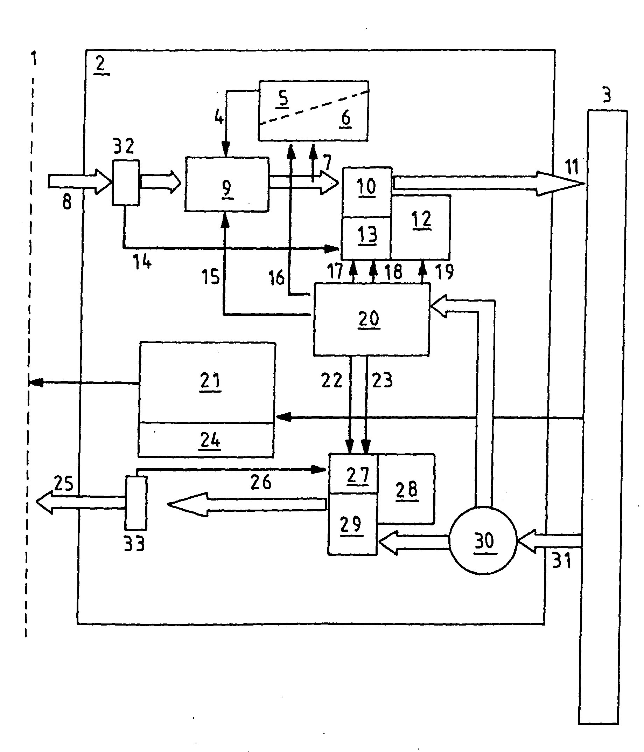

Im folgenden wird die Erfindung mit Hilfe der Figur beispielhaft erläutert.

In der Figur ist ein CBI 2 erkennbar, welcher als Schnittstelle zwischen einem Mikroprozessor 1 und einem Paketdatenbus 3 (sogenannter CBus) angeordnet ist. Der Mikroprozessor kann Daten 8 an den CBI geben, welche von diesem über den zum Paketdatenbus gerichteten Ausgang 11 an den Paketdatenbus 3 übergeben werden. In umgekehrter Richtung können Daten 31 vom Paketdatenbus 3 an den CBI 2 gegeben und von diesem am zum Mikroprozessor führenden Ausgang 25 an den Mikroprozessor 1 weitergeleitet werden. Der CBI 2 übernimmt dabei die Kontrolle der Kommunikation des Mikroprozessors über den Paketdatenbus.

Das Senden von Daten 8 durch den Mikroprozessor 1 über den Paketdatenbus 3 verläuft prinzipiell so, dass die Daten zunächst im CBI über ein gate 9 paketweise in den Transmissionspuffer 10 (T-buffer) geführt werden. Aus dem T-buffer 10 werden die Datenpakete dann an den Paketdatenbus 3 weitergeleitet. Dabei zeigt ein Signal 4 aus einer Steuereinheit für die Wartezeit 5 und die Paketgröße 6 dem gate 9 an, dass ein Datenpaket in den T-buffer 10 transportiert werden kann. Bei der Überführung dieses Paketes wird die Paketgröße (in Bit) über die Leitung 7 von einer Steuereinheit 6 erfasst.

Dieselbe Steuereinheit 6 erhält über ein Leitungsbündel 16 aus einem zentralen Initialisierungsregister 20 eine Information darüber, welche Datenrate (Mbit/s) in den T-buffer 10 laufen darf. Aus dieser Datenrate und der Paketgröße 6 lässt sich eine Wartezeit 5 berechnen, die zwischen der Übertragung zweier Datenpakete vom gate 9 in den T-buffer 10 abgewartet werden muss. Diese Wartezeit 5 entscheidet demnach darüber, wann ein Signal 4 an das gate 9 abgegeben wird. Über diesen Mechanismus kann die maximale Datentransferrate, mit welcher der CBI 2 auf den Paketdatenbus 3 zugreift, gesteuert werden. Die entsprechende Information über die Transferrate ist dabei im Initialisierungsregister 20 abgelegt, was insbesondere beim Starten des Systems (Initialisierung) passieren kann.

Weiterhin ist eine Verbindungsleitung 15 zwischen dem Initialisierungsregister 20 und dem gate 9 erkennbar, über welche dem gate 9 der Zustand eines flags im Register 20 mitgeteilt werden beziehungsweise ein entsprechendes flag im gate 9 gesetzt werden kann. Bei Setzen dieses flags wird das gate 9 gesperrt, so dass kein Paket mehr in den T-buffer 10 gelangen kann. Die Sendung durch den CBI 2 ist somit unterbrochen (erste Möglichkeit des "transmit disable"). Eine solche Unterbrechung der Verbindung zum Paketdatenbus 3 kann insbesondere in Zeiten der Überlastung sinnvoll sein. Sie wird wiederum durch das zentrale Initialisierungs- und Flagregister 20 gesteuert.

Sofern der CBI 2 ein FIFO 32 (First In First Out) enthält, kann über die Leitung 14 der Füllstand dieses Zwischenspeichers an die Transmit Timeout Einheit bei Rückstau T-TO 13 gemeldet werden. Insbesondere kann das Signal abgegeben werden, wenn der FIFO Füllstand z.B. mehr als 50% beträgt. Die der Transmit Timeout T-TO 13 vom Initialisierungsregister 20 vorgegebene Überwachungszeit legt fest, welche Zeit nach Eintrag eines Datenpakets in den T-buffer 10 abgewartet werden soll, bis das Paket weggeworfen wird, falls es in der Zwischenzeit nicht erfolgreich gesendet wurde. Die Größe dieser Zeit wird über die Signalleitungen 17 vom Initialisierungsregister 20 festgelegt.

Weiterhin ist die Transmit Timeout T-TO Einheit 13 über eine weitere Leitung 18 mit dem Initialisierungsregister 20 verbunden, über welche der Einheit 13 bei Rückstau signalisiert wird, dass beziehungsweise um wieviel der eingestellte Zeitwert zu reduzieren ist. So kann zum Beispiel eine Reduzierung des Timeout Wertes auf ein Viertel erfolgen, wenn das Transmit FIFO zu über 50% gefüllt ist. Ein kleinerer Timeout Wert hat zur Folge, dass andere Datenpakete über funktionierende Datenverbindungen an empfangsbereite Empfänger gesandt werden, so dass die Transportgüte verbessert wird.

Wenn ein Empfänger gestört ist, wird ein Sendeversuch über z. B. 10 bis 30 Millisekunden durchgeführt und dann alle anderen Sender und Empfänger angesprochen. Nach Überschreiten des Timeout wird das Paket im T-buffer 10 weggeworfen. Wenn nun der Füllstand des entsprechenden FIFO anzeigt, dass eine ungewöhnlich Situation gegeben ist, die beispielsweise dann gegeben ist, wenn der FIFO einen Füllstand zwischen 50 und 100 % erreicht hat, dann muss die Timeout reduziert werden, beispielsweise auf ½ oder ein ¼. Dies ist allerdings eine Vorgehensweise, die nur in bestimmten Situationen sinnvoll ist. Denn bei einer üblichen Arbeitsweise sind beispielsweise 5 Millisekunden zu knapp. Wenn irgendwelche Schwierigkeiten innerhalb des Systems auftreten, dann kann eine Überwachungszeit von 5 Millisekunden bis zum Abbruch zu kurz bemessen sein. In besonderen Fällen ist es allerdings sinnvoll, bei Feststellung eines defekten Teilnehmers nach einer kurzen Überwachungszeit abzubrechen, um den Transport der nachfolgenden Pakete im gleichen CBI möglichst gering zu behindern.

Die Arbeit der Übertragungseinheit 10, 13 wird von einer Transmit Control Logic T-ctrl 12 kontrolliert. Diese ist über eine Signalleitung 19 mit dem Initialisierungsregister 20 verbunden. Über diese Leitung kann der Zustand eines flags übermittelt werden, welches anzeigt, dass Pakete im T-buffer 10 nicht gesendet werden sollen. Diese Pakete sollen vielmehr ohne Paketverlustmeldung gleich weggeworfen werden (zweite Möglichkeit des "Transmit disable").

Der Empfang von Daten 31 aus dem Paketdatenbus 3 über den CBI 2 verläuft im Prinzip ähnlich wie das Senden der Daten. Die eingehenden Daten 31 werden über einen Schalter 30 an einen Puffer (R-buffer) 29 geleitet und dort zwischengespeichert. Der Schalter 30 kann den Datenpfad ausnahmsweise zu den Initialisierungsregistern 20 umleiten, wenn die hinter dem Schalter gelegene Receive Control Logic R-ctrl 28 erkennt, dass das aktuelle Datenpaket auf dem Paketdatenbus 3 ein Initialisierungspaket für den CBI ist.

Die Receive Timeout Einheit R-TO 27 enthält die Überwachungszeit für die Weiterleitung eines im R-buffer befindlichen Paketes. Wird diese Zeit nach dem Eintrag eines Paketes in den R-buffer 29 erreicht und will ein neues Paket in den R-buffer, so wird das im R-buffer befindliche Paket weggeworfen. Auch hier ist es wiederum möglich, die Überwachungszeit im Falle einer hohen Belastung der Datenübertragung zu reduzieren, indem vom Initialisierungsregister 20 über eine Leitung 23 ein entsprechendes Signal gesendet wird. Dieses Signal kann zum Beispiel veranlassen, dass der eingestellte Zeitwert auf ein Viertel zu reduzieren ist, wenn das Receive FIFO 33 (falls vorhanden) zu über 50% gefüllt ist. Der Füllstand des Receive FIFO wird dabei über die Leitung 26 gemeldet.

Über die Leitung 23 kann alternativ und/oder zusätzlich auch eine vollständige Unterbrechung der Datenübertragung vom Paketdatenbus 3 zum Mikroprozessor 1 gesteuert werden.

Auf der Empfangsseite stehen somit ähnliche Mechanismen für die Überwachung des Paketflusses zur Verfügung wie auf der Senderseite. Diese werden zentral vom Initialisierungsregister 20 gesteuert.

Darüber hinaus sind Informationsregister 21 auf dem CBI 2 vorhanden, welche insbesondere ein Maß 24 über die Belastung des Paketdatenbus 3 enthalten. Der Mikroprozessor 1 hat Zugriff auf die Informationen in den Informationsregistern 21 und kennt daher die Belastung des Paketdatenbusses. Er kann diese Information dann für eine intelligente Steuerung der Datenübertragung auf höherer Ebene ausnutzen.

### Bezugszeichenliste

| | |
|---|---|
| Mikroprozessor | 1 |
| CBI | 2 |
| CBus | 3 |
| Signal | 4 |
| Wartezeit | 5 |
| Paketgröße (Steuereinheit) | 6 |
| Leitung | 7 |
| Daten | 8 |
| Gate | 9 |
| Transmissionpuffer | 10 |
| Ausgang | 11 |
| T-ctrl | 12 |
| Tansmit-Timeout Einheit T-TO | 13 |
| Leitung (FIFO-Füllstand) | 14 |
| Verbindungsleitung | 15 |
| Leitung | 16 |
| Signalleitungen | 17 |
| Leitung | 18 |
| Signalleitung | 19 |
| Initialisierungsregister | 20 |
| Informationsregister | 21 |
| Leitung | 22 |
| Leitung | 23 |
| Auslastungsgradmesser | 24 |
| Ausgang zum Mikroprozessor | 25 |
| Leitung (FIFO-Füllstand) | 26 |
| Receive Timeout Einheit R-TO | 27 |
| Receive Control Logic R-ctrl | 28 |
| R-buffer | 29 |
| Schalter | 30 |
| eingehende Daten | 31 |
| FIFO | 32 |
| FIFO | 33 |

## Patentansprüche

1. Verfahren zur Steuerung einer hohen Transportgüte eines Paketdatenbusses (3), auf welchen mehrere angeschlossene Teilnehmer (1) mit verschiedenen Datenübertragungsraten über jeweils eine konfigurierbare Schnittstelle (2) zugreifen können, wobei die Schnittstelle bei stockendem Paketfluß so konfiguriert wird, dass die Überwachungszeit vom Absenden bis zum Empfang eines Datenpaketes, das von der Schnittstelle an einen anderen Teilnehmer am Paketdatenbus oder an den mit der Schnittstelle verbundenen Teilnehmer (1) gesendet wurde, durch die Schnittstelle selbst reduziert wird.

2. Verfahren nach Anspruch 1, **dadurch gekennzeichnet, dass** in der Schnittstelle (2) vorhandene Mittel (14, 24, 26) den Stau des Paketflusses erfassen und in Abhängigkeit hiervon die Schnittstelle (2) konfigurieren.

3. Verfahren nach Anspruch 2, **dadurch gekennzeichnet, dass** die genannten Mittel (14, 26) den Rückstau von Daten erfassen, die von der Schnittstelle (2) an einen anderen Teilnehmer am Paketdatenbus (3) und/oder an den mit der Schnittstelle verbundenen Teilnehmer (1) übermittelt werden sollen.

4. Verfahren nach Anspruch 3, **dadurch gekennzeichnet, dass** die genannten Mittel (14, 26) den Füllstand von Datenzwischenspeichern (32, 33) erfassen und bei Überschreiten oder Unterschreiten eines bestimmten Füllstandes eine Neukonfigurierung der Schnittstelle (2) veranlassen.

5. Verfahren nach einem der Ansprüche 1 bis 4, **dadurch gekennzeichnet, dass** die Konfiguration durch Setzen eines Registers (18) erfolgt, welches die Reduzierung der Überwachungszeit auf einen bestimmten Bruchteil signalisiert.

6. Verfahren nach einem der Ansprüche 1 bis 5, **dadurch gekennzeichnet, dass** die Schnittstelle (2) bei hoher Auslastung des Paketdatenbusses (3) so konfiguriert wird, **dass** die maximale Datentransferrate über den Paketdatenbus begrenzt wird.

7. Verfahren nach Anspruch 6, **dadurch gekennzeichnet, dass** die Konfiguration durch Setzen eines Registers (16) erfolgt, welches die Reduzierung der Datentransferrate auf einen bestimmten Bruchteil signalisiert.

8. Verfahren nach einem der Ansprüche 1 bis 7, **dadurch gekennzeichnet, dass** die Schnittstelle (2) bei hoher Auslastung des Paketdatenbusses so konfiguriert wird, **dass** kein Zugriff auf den Paketdatenbus mehr erfolgt.

9. Verfahren nach einem der Ansprüche 1 bis 8, **dadurch gekennzeichnet, dass** die Auslastung des Paketdatenbusses (3) gemessen und protokolliert wird und **dass** der Zugriff der Schnittstelle (2) auf den Paketdatenbus nur dann zugelassen wird, wenn die erwartungsgemäß beanspruchte Bandbreite bei der aktuellen Auslastung des Paketdatenbusses nicht zu einer Überlastung des Paketdatenbusses führt.

10. Verfahren nach einem der Ansprüche 1 bis 9, **dadurch gekennzeichnet, dass** die Konfigurierung der Schnittstelle (2) durch eine zentrale Einheit zur Steuerung des Paketdatenbusses (3) erfolgt.

11. Schnittstelle (2) zur Ankopplung einer Prozessorbaugruppe (1) an einen Paketdatenbus (3), enthaltend einen Zwischenspeicher (10, 29) für zu übermittelnde Datenpakete sowie eine Überwachungsschaltung (12, 13, 27, 28) zur Überwachung der Übertragung der im Zwischenspeicher enthaltenen Daten an einen Empfänger, wobei ein Übertragungsversuch nach einer vorgegebenen Überwachungszeit abgebrochen wird, wenn kein Empfang der Daten erfolgt ist, **dadurch gekennzeichnet, dass** sie ein Initialisierungsregister (20) mit Konfigurationsspeichern enthält, wobei mindestens ein Konfigurationsspeicher (18, 23) so gesetzt werden kann, **dass** von der Überwachungsschaltung die genannte Überwachungszeit gegenüber dem vorgegebenen Wert verkürzt wird.

12. Schnittstelle nach Anspruch 11, **dadurch gekennzeichnet, dass** sie eine Monitorschaltung (28, 30) enthält, welche vom Paketdatenbus (3) empfangene Daten mit Konfigurierungsinformation an das Initialisierungsregister (20) weiterleiten kann.

13. Schnittstelle nach einem der Ansprüche 11 oder 12, **dadurch gekennzeichnet, dass** sie Rückmeldungsleitungen (14, 26) von weiteren Datenzwischenspeichern (32, 33) zur Überwachungsschaltung (12, 13, 27, 28) für die Datenübertragung aufweist, über welche der Füllstand der weiteren Datenzwischenspeicher gemeldet werden kann.

14. Schnittstelle nach einem der Ansprüche 11 bis 13, **dadurch gekennzeichnet, dass** das Initialisierungsregister (20) Konfigurationsspeicher (16) enthält, welche die maximale Datentransferrate steuern.

15. Schnittstelle nach einem der Ansprüche 11 bis 14, **dadurch gekennzeichnet, dass** das Initialisierungsregister (20) Konfigurationsspeicher (15, 19, 23) enthält, welche eine Unterbrechung des Datentransfers steuern.

16. Schnittstelle nach einem der Ansprüche 11 bis 15, **dadurch gekennzeichnet, dass** sie ein für den an der Schnittstelle (2) angeschlossenen Teilnehmer (1) zugängliches Informationsregister (21) enthält, in welchem unter anderem ein Maß für die Auslastung des Paketdatenbusses (3) enthalten ist.
